# EUROPÄISCHE PATENTSCHRIFT

(11) **EP 1 804 081 B1**
(45) Veröffentlichungstag und Bekanntmachung des Hinweises auf die Patenterteilung: **24.03.2010**
(21) Anmeldenummer: 05113053.2
(22) Anmeldetag: 29.12.2005
(51) Int. Cl.: G01T 1/29

(54) **Vorrichtung zum Auslesen von in einer Speicherleuchtstoffschicht abgespeicherten Röntgeninformationen sowie Radiografiemodul**
Device for reading out X-ray information stored in a storage phosphor layer and radiography module
Dispositif destiné à la lecture d'informations radiographiques stockées dans une couche fluorescente de mémoire et module de radiographie

(43) Veröffentlichungstag der Anmeldung: 04.07.2007
(73) Patentinhaber: Agfa-Gevaert HealthCare GmbH, 50670 Köln (DE)
(72) Erfinder: Mair, Stephan, D-86163 Augsburg (DE); Stallmeister, Stephan, D-85625 Glonn (DE); Nissen, Jens, D-81825 München (DE)

(56) Entgegenhaltungen:
- DE-A1- 3 731 204
- PATENT ABSTRACTS OF JAPAN Bd. 2003, Nr. 12, 5. Dezember 2003 (2003-12-05) -& JP 2003 344964 A (KONICA MINOLTA HOLDINGS INC), 3. Dezember 2003 (2003-12-03)

## Beschreibung

Die vorliegende Erfindung betrifft eine Vorrichtung zum Auslesen von in einer Speicherleuchtstoffschicht abgespeicherten Röntgeninformationen gemäß dem Oberbegriff des Anspruchs 1 sowie ein Radiografiemodul.

Solche Vorrichtungen werden insbesondere im Bereich der Computer-Radiografie (CR) für medizinische Zwecke eingesetzt. Dabei wird von einem Objekt, beispielsweise einem Patienten oder einem Körperteil des Patienten, mittels Röntgenbestrahlung ein Bild erzeugt, das in einer Speicherleuchtstoffschicht als latentes Bild abgespeichert wird. Ein solches Röntgenbild enthält somit Röntgeninformationen über das Objekt. Zum Auslesen der in der Speicherleuchtstoffschicht abgespeicherten Röntgeninformationen wird die Speicherleuchtstoffschicht mittels einer Bestrahlungseinrichtung angeregt. Die Speicherleuchtstoffschicht emittiert aufgrund dieser Anregung Licht, das eine Intensität entsprechend der in der Speicherleuchtstoffschicht abgespeicherten Röntgeninformationen aufweist. Das von der Speicherleuchtstoffschicht ausgesandte Licht wird von einer Detektionseinrichtung erfasst und in elektrische Signale gewandelt, die ein Abbild der Röntgeninformationen enthalten. Die elektrischen Signale werden weiterverarbeitet und die in der Speicherleuchtstoffschicht abgespeicherten Röntgeninformationen anschließend sichtbar gemacht. Die Röntgeninformationen können beispielsweise direkt auf einem Monitor dargestellt oder mittels eines speziell für Röntgenbilder verwendbaren Druckers auf einen fotografischen Röntgenfilm geschrieben werden.

Aus DE 37 31 204 A1 sind Kassetten für Speicherleuchtstofffolien bekannt, welche in einer Lesestation ausgelesen werden können. Die Kassetten weisen jeweils einen Halbleiterspeicher auf, dessen Lage und Abstand zu einer bestimmten Ecke einer jeweiligen Kassette bei allen gleichartigen Kassetten unterschiedlicher Formate gleich ist. Auf diese Weise können die Halbleiterspeicher auch von Kassetten mit unterschiedlichen Formaten in einer Identifikationsstation bzw. Lesestation zuverlässig positioniert und sicher ausgelesen und/oder beschrieben werden.

Es ist eine Auslesevorrichtung zum Auslesen von Röntgeninformationen bekannt, die als selbständiges Modul ausgeführt ist, das zur Aufnahme von Röntgenbildern in unterschiedliche Röntgensysteme, wie z. B. einen Röntgenstand oder Röntgentisch, eingeführt oder integriert werden kann. Zum Auslesen der Röntgeninformationen kann die Auslesevorrichtung in dem Röntgensystem verbleiben. Abhängig von den verschiedenen Ausgestaltungen der verwendeten Röntgensysteme kann die Auslesevorrichtung in unterschiedlichen Ausrichtungen oder Orientierungen in die Röntgensysteme eingeführt sein. Dazu ist die Auslesevorrichtung schwenkbar. Die Auslesevorrichtung kann beispielsweise in einem Winkelbereich von 0° bis 90° gegen die Horizontale schwenkbar sein. Dadurch ist sie sehr flexibel in einer Vielzahl von unterschiedlichen Röntgensystemen einsetzbar. Aber auch beim Auslesen der Röntgeninformationen außerhalb eines Röntgensystems ist man durch die Möglichkeit des Schwenkens nicht an eine einzige Ausleseposition gebunden, sondern kann diese, je nach vorhandenen Verhältnissen, geeignet auswählen. Es wurde allerdings festgestellt, dass sich die Qualitäten der ausgelesenen Röntgenbilder abhängig von dem Verschwenken unterscheiden und insbesondere Verzerrungen im ausgelesenen Röntgenbild auftreten können.

Es ist daher die Aufgabe der vorliegenden Erfindung, eine Vorrichtung zum Auslesen von in einer Speicherleuchtstoffschicht abgespeicherten Röntgeninformationen oder ein Radiografiemodul anzugeben, mit denen auf technisch einfache Weise eine gute Bildqualität des ausgelesenen Röntgenbildes gewährleistet werden kann.

Diese Aufgabe wird gemäß der technischen Lehre des Anspruchs 1 oder des Anspruchs 14 gelöst. Die erfindungsgemäße Vorrichtung zum Auslesen von in einer Speicherleuchtstoffschicht abgespeicherten Röntgeninformationen enthält ein Erfassungsmittel zum Erfassen einer Ausrichtung der Vorrichtung. In das erfindungsgemäße Radiografiemodul ist eine erfindungsgemäße Vorrichtung zum Auslesen von Röntgeninformationen integriert. Erfindungsgemäß ist außerdem
- ein Steuermittel zum Verarbeiten der aus der Speicherleuchtstoffschicht ausgelesenen Röntgeninformationen vorhanden, das so ausgestaltet ist, dass es die ausgelesenen Röntgeninformationen in Abhängigkeit von der erfassten Ausrichtung der Vorrichtung verarbeitet, wobei die Intensität und/oder die Auflösung der Röntgenbilder eingestellt werden,
und/oder
- ein weiteres Steuermittel zum Steuern der Vorrichtung vorhanden, das so ausgestaltet ist, dass es das Auslesen der Röntgeninformationen in Abhängigkeit von der erfassten Ausrichtung der Vorrichtung steuert, indem es die Bestrahlungseinrichtung durch Verändern der Strahlungsintensität oder Dauer des Einstrahlens der Anregungsstrahlung und/oder die Detektionseinrichtung durch Verändern der Strahlungsintensität oder Dauer des Einstrahlens der Anregungsstrahlung und/oder die Detektionseinrichtung durch Verändern der Zeitdauer des Aufsammelns von Emissionsstrhalung und/oder die Geschwindigkeit der Relativbewegung in Abhängigkeit von der erfassten Ausrichtung der Vorrichtung ansteuert.

Dadurch kann besonders effizient eine gute Qualität des Röntgenbilds erreicht werden, indem die beim Auslesen auftretenden unerwünschten Verzerrungen mittels des Steuermittels beim Verarbeiten der Röntgeninformationen heraus korrigiert werden, bzw. es erfolgt bereits das Auslesen selbst in geeigneter Weise, so dass unerwünschte Verzerrungen schon frühzeitig beim Erfassen der Röntgeninformationen vermieden werden.

Der Erfindung liegt die Erkenntnis zugrunde, dass eine schwenkbare Auslesevorrichtung je nach ihrer Ausrichtung, d. h. ihrer Orientierung oder Lage, einer unterschiedlichen Belastung durch die Schwerkraft unterliegt. Da beim Auslesen der Röntgeninformationen sehr hohe Gleichlaufforderungen an die Auslesevorrichtung bestehen und die Komponenten der Auslesevorrichtung hohen Anforderungen an die Exaktheit ihrer Arbeits- und Funktionsweisen unterliegen, ist die bei unterschiedlichen Ausrichtungen der Auslesevorrichtung unterschiedlich stark auf die Auslesevorrichtung und ihre Komponenten wirkende Schwerkraft von großer Bedeutung. Erfindungsgemäß ist es beispielsweise möglich, Artefakte im ausgelesenen Röntgenbild zu vermeiden, die abhängig von der Ausrichtung der Vorrichtung auftreten. Solche Artefakte können z. B. aufgrund von Verbiegungen einzelner Komponenten der Auslesevorrichtung durch ihr Eigengewicht auftreten. Des Weiteren ist es möglich, dass Verzerrungen oder Artefakte durch eine Änderung einer Auslesegeschwindigkeit auftreten, mit der die Speicherleuchtstoffschicht ausgelesen wird. Abhängig von der Ausrichtung der Auslesevorrichtung kann z. B. ein Schlupf beim Auslesen auftreten, der insbesondere mehr oder weniger groß sein kann. Dies führt zu Änderungen der Auslesegeschwindigkeit. Aufgrund der vorliegenden Erfindung erhält die Vorrichtung vorteilhafterweise die Möglichkeit, das Erfassen der Ausrichtung zu nutzen, um Verzerrungen und andere schädliche Einflüsse auf die Qualität des ausgelesenen Röntgenbilds zu vermeiden. Vorteilhafterweise kann beispielsweise bereits vor dem Auslesen der Röntgeninformationen eine beim Auslesen zu erwartende Auslesegeschwindigkeit abhängig von der erfassten Ausrichtung ermittelt werden. Die Erfindung ermöglicht es zudem, eine zweidimensionale Kalibrierung der Auslesevorrichtung vorzunehmen, da Inhomogenitäten der Speicherleuchtstoffschicht in ausgelesenen Röntgenbildern vorteilhafterweise immer an den gleichen Stellen auftreten.

In einer vorteilhaften Ausgestaltung der Erfindung ist das Erfassungsmittel so ausgestaltet, dass es die Richtung der Erdbeschleunigung erfasst. Mit einem solchen Erfassungsmittel lässt sich die Ausrichtung der Vorrichtung besonders einfach und exakt ermitteln.

Vorzugsweise umfasst das Erfassungsmittel wenigstens einen Beschleunigungssensor. Ein solcher Sensor ist in vielen unterschiedlichen Varianten verfügbar, so dass für den vorliegenden Zweck auf einfache Weise ein geeigneter und kostengünstiger Sensor ausgewählt werden kann.

In einer weiteren vorteilhaften Ausgestaltung umfasst das Erfassungsmittel wenigstens einen Drehsensor. Mit einem solchen Drehsensor lässt sich ebenfalls einfach, zuverlässig und kostengünstig die Ausrichtung bestimmen. Ein solcher Drehsensor kann insbesondere an einer Drehachse der Vorrichtung angeordnet sein. Dies führt zu einem besonders genauen Ergebnis.

Vorzugsweise enthält das Steuermittel vorgegebene Angaben zum Verarbeiten der ausgelesenen Röntgeninformationen. Dabei ist so ausgestaltet, dass es wenigstens einen Teil der vorgegebene Angaben in Abhängigkeit von dem Erfassen der Ausrichtung der Vorrichtung auswählt und die ausgewählten Angaben zum Verarbeiten der Röntgeninformationen verwendet. Die Angaben zum Verarbeiten der ausgelesenen Röntgeninformationen können vorteilhafterweise in einer Tabelle, einer sog. Look-Up Tabelle, enthalten sein, die sich auf besonders einfache Weise in dem Steuermittel implementieren lässt. Die Angaben zum Verarbeiten der ausgelesenen Röntgeninformationen können für verschiedene Ausrichtungen der Vorrichtung, z. B. mittels Tests, bereits vor dem Auslesen der Röntgeninformationen ermittelt werden.

In der erfindungsgemäßen Vorrichtung sind eine Bestrahlungseinrichtung zum Bestrahlen der Speicherleuchtstoffschicht mit einer Anregungsstrahlung und eine Detektionseinrichtung zum Erfassen von Emissionsstrahlung, die die Speicherleuchtstoffschicht aufgrund des Bestrahlens mittels der Anregungsstrahlung ausgibt, vorhanden. Vorzugsweise sind die Bestrahlungseinrichtung und die Detektionseinrichtung einander fest zugeordnet. Auf diese Weise kann die Anregungsstrahlung besonders exakt auf die anzuregende Speicherleuchtstoffschicht gerichtet und die von der Speicherleuchtstoffschicht aufgrund des Anregens ausgegebene Emissionsstrahlung besonders genau erfasst werden. Erfindungsgemäß weist die Vorrichtung eine Antriebseinrichtung zum Erzeugen einer Relativbewegung zwischen der Speicherleuchtstoffschicht einerseits und der Anregungseinrichtung und der Detektionseinrichtung andererseits auf. Das Auslesen, d. h. das Anregen der Speicherleuchtstoffschicht und das Erfassen der Emissionsstrahlung, erfolgt beispielhaft zeilenweise.

Erfindungsgemäß ist das weitere Steuermittel so ausgestaltet, dass es die Bestrahlungseinrichtung in Abhängigkeit von der erfassten Ausrichtung der Vorrichtung ansteuert. Dabei können vorteilhafterweise unterschiedliche Auslesetiefen in der Speicherleuchtstoffschicht vermieden werden. Diese entstehen bei unterschiedlichen Auslesegeschwindigkeiten durch Änderungen der in die Speicherleuchtstoffschicht eingebrachten Anregungsstrahlung. Bei langsamer Auslesegeschwindigkeit ist die Menge der in die Speicherleuchtstoffschicht eingebrachten Anregungsstrahlung höher, wodurch sich auch die Menge an ausgegebener Emissionsstrahlung entsprechend verändert. Daher ist bei langsamer Auslesegeschwindigkeit die Intensität der ausgelesenen Röntgeninformationen im Allgemeinen anders als bei schneller Auslesegeschwindigkeit.

Vorteilhafterweise ist das weitere Steuermittel so ausgestaltet, dass es die Detektionseinrichtung in Abhängigkeit von der erfassten Ausrichtung der Vorrichtung ansteuert. Hierbei wird die Zeit, in der die Detektionseinrichtung ausgegebene Emissionsstrahlung aufnimmt, entsprechend abhängig von der Ausrichtung der Vorrichtung eingestellt.

Vorzugsweise ist das weitere Steuermittel so ausgestaltet, dass es die Geschwindigkeit der Relativbewegung in Abhängigkeit von der erfassten Ausrichtung der Vorrichtung steuert. Durch das Erfassen der Ausrichtung der Vorrichtung ist es möglich, festzustellen, welchen Einfluss die Schwerkraft auf die Vorrichtung, insbesondere ihre Antriebseinrichtung hat. Damit kann auf technisch einfache Weise die Geschwindigkeit selbst gesteuert werden. Eine der grundlegenden Ursachen für das Auftreten von Verzerrungen kann dadurch von Beginn an unterbunden werden.

In einer besonders vorteilhaften Ausgestaltung der Erfindung enthält das weitere Steuermittel vorgegebene Angaben zum Steuern der Vorrichtung. Dabei ist es so ausgestaltet, dass es einen Teil der vorgegebene Angaben in Abhängigkeit von der erfassten Ausrichtung der Vorrichtung auswählt und die ausgewählten Angaben zum Steuern der Vorrichtung verwendet. Die Angaben zum Steuern der Vorrichtung können vorteilhafterweise in einer Tabelle, einer sog. Look-Up Tabelle, enthalten sein, die sich auf besonders einfache Weise in dem weiteren Steuermittel implementieren lässt. Die Angaben zum Steuern der Vorrichtung können für verschiedene Ausrichtungen der Vorrichtung, z. B. mittels Tests, bereits vor dem Auslesen der Röntgeninformationen ermittelt werden. Die Angaben enthalten vorteilhafterweise Steuerparameter für das weitere Steuermittel, die dieses zum Ansteuern der Bestrahlungseinrichtung, der Detektionseinrichtung und/oder zum Steuern der Geschwindigkeit der Relativbewegung einsetzt.

Vorzugsweise ist ein weiteres Erfassungsmittel zum Erfassen einer Geschwindigkeit der Relativbewegung vorhanden. Dadurch kann die aktuelle Geschwindigkeit der Relativbewegung bestimmt werden. Weicht diese beispielsweise von einer gewünschten Geschwindigkeit ab, so kann die Vorrichtung, insbesondere das Steuermittel, die Abweichung beim Verarbeiten der ausgelesenen Röntgeninformationen berücksichtigen. Alternativ oder zusätzlich kann auch das weitere Steuermittel die Abweichung beim Steuern der Vorrichtung verwenden. Dadurch ist eine weitere Verbesserung der Qualität des Röntgenbildes zu erreichen. Bei zu erwartender gleichbleibender Geschwindigkeit während des Auslesens der Röntgeninformationen eines Röntgenbilds ist es ausreichend, die Geschwindigkeit ein einziges Mal zu bestimmen. Es ist aber ebenso möglich, die Geschwindigkeit mehrfach zu erfassen. Dadurch kann noch genauer eine eventuelle Abweichung der Geschwindigkeit erfasst und entsprechend korrigiert werden. Dies kann insbesondere dann vorteilhaft sein, wenn sich ein beim Auslesen auftretender Schlupf während des Auslesens ändert. Diese Änderungen können dann erfasst und geeignet korrigiert werden.

Besonders bevorzugt ist das weitere Erfassungsmittel so ausgestaltet, dass es wenigstens eine mittlere Geschwindigkeit der Relativbewegung erfasst. Diese mittlere Geschwindigkeit tritt während des Auslesens der Röntgeninformationen zwischen wenigstens zwei relativen Positionen zwischen der Speicherleuchtstoffschicht einerseits und der Anregungs- und Detektionseinrichtung andererseits auf. Ein solches Bestimmen der mittleren Geschwindigkeit ist besonders einfach umzusetzen.

Bevorzugt weist das weitere Erfassungsmittel wenigstens zwei Sensoren auf, die den wenigstens zwei relativen Positionen zugeordnet sind. Die wenigstens zwei Sensoren dienen zum Bestimmen einer Zeit, die die Relativbewegung beim Auslesen der Röntgeninformationen zwischen dem Erreichen der wenigstens zwei Positionen benötigt. Die Sensoren können insbesondere Lichtschranken sein. Dies ist besonders kostengünstig und einfach zu realisieren.

Vorteilhafterweise ist die Vorrichtung so ausgestaltet, dass sie die von dem Erfassungsmittel erfasste Ausrichtung der Vorrichtung und die von dem weiteren Erfassungsmittel erfasste Geschwindigkeit einander zuordnet und diese Zuordnung den vorgegebenen Angaben zum Verarbeiten der Röntgeninformationen hinzufügt. Auf diese Weise kann eine selbstlernende Vorrichtung erreicht werden, die die Zuordnung von Ausrichtung der Vorrichtung zu der bei dieser Ausrichtung erreichten Auslesegeschwindigkeit mit jedem ausgelesenem Röntgenbild verfeinern und dadurch die Korrektur durch das Steuermittel immer weiter verbessern kann. Dies kommt vorteilhafterweise dem Auslesen nachfolgender Röntgenbilder zugute.

Besonders vorteilhaft ist die Vorrichtung so ausgestaltet, dass sie die von dem Erfassungsmittel erfasste Ausrichtung der Vorrichtung und die von dem weiteren Erfassungsmittel erfasste Geschwindigkeit einander zuordnet und diese Zuordnung den vorgegebenen Angaben zum Steuern der Vorrichtung hinzufügt. Auf diese Weise kann eine selbstlernende Vorrichtung erreicht werden, die die Zuordnung von Ausrichtung der Vorrichtung zu der bei dieser Ausrichtung erreichten Auslesegeschwindigkeit mit jedem ausgelesenem Röntgenbild verfeinern und dadurch die Korrektur durch das weitere Steuermittel immer weiter verbessern kann.

Weitere Vorteile der Erfindung ergeben sich aus der folgenden Beschreibung von Ausführungsbeispielen, wobei Bezug auf die beigefügten Zeichnungen genommen wird.

Es zeigen:
- Fig. 1: eine schematische, perspektivische Darstellung eines Ausführungsbeispiels einer erfindungsgemäßen Vorrichtung zum Auslesen von in einer Speicherleuchtstoffschicht abgespeicherten Röntgeninformationen, wobei die Vorrichtung als Radiografiemodul ausgestaltet ist,
- Fig. 2: eine weitere schematische Darstellung eines Aufbaus des Radiografiemoduls nach Fig. 1,
- Fig. 3: eine schematische Darstellung eines Anwendungsbeispiels des Radiografiemoduls nach Fig. 1 eingesetzt in einem Röntgensystem,
- Fig. 4: eine schematische Darstellung einer Draufsicht auf das Radiografiemodul nach Fig. 1,
- Fig. 5: ein Ablaufdiagramm mit einem ersten Beispiel für einen erfindungsgemäßen Ablauf in dem Radiografiemodul nach Fig. 1,
- Fig. 6: ein Ablaufdiagramm mit einem zweiten Beispiel für einen erfindungsgemäßen Ablauf in dem Radiografiemodul nach Fig. 1,
- Fig. 7: ein Ablaufdiagramm mit einem dritten Beispiel für einen erfindungsgemäßen Ablauf in dem Radiografiemodul nach Fig. 1,
- Fig. 8: ein Ablaufdiagramm mit einem vierten Beispiel für einen erfindungsgemäßen Ablauf in dem Radiografiemodul nach Fig. 1,
- Fig. 9: ein Ablaufdiagramm mit einem fünften Beispiel für einen erfindungsgemäßen Ablauf in dem Radiografiemodul nach Fig. 1 und
- Fig. 10: ein Ablaufdiagramm mit einem sechsten Beispiel für einen erfindungsgemäßen Ablauf in dem Radiografiemodul nach Fig. 1.

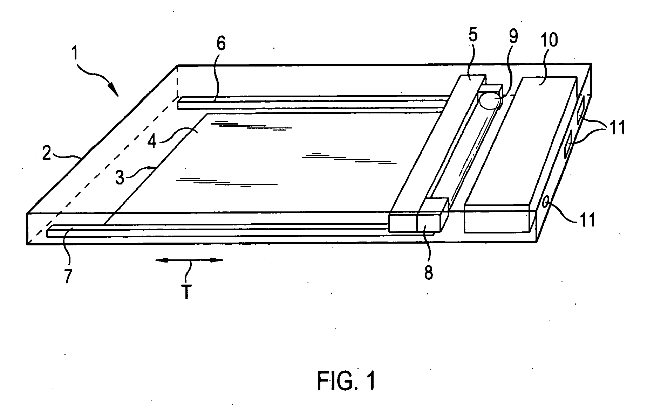

Fig. 1 zeigt eine schematische, perspektivische Darstellung eines Ausführungsbeispiels einer erfindungsgemäßen Auslesevorrichtung zum Auslesen von in einer Speicherleuchtstoffschicht abgespeicherten Röntgeninformationen. Die Auslesevorrichtung ist hier als Radiografiemodul 1 ausgestaltet. Das Radiografiemodul 1 kann zur Aufnahme von Röntgenbildern in unterschiedliche Röntgensysteme, wie z. B. einen Röntgenstand oder Röntgentisch, eingeführt oder integriert werden. Dazu ist das Radiografiemodul 1 schwenkbar. Zum Auslesen des in der Speicherleuchtstoffschicht abgespeicherten Röntgenbilds kann das Radiografiemodul 1 im Röntgensystem verbleiben und muss nicht - wie eine herkömmliche Röntgenkassette - aus dem Röntgensystem entnommen und einer separaten Auslesestation zugeführt werden.

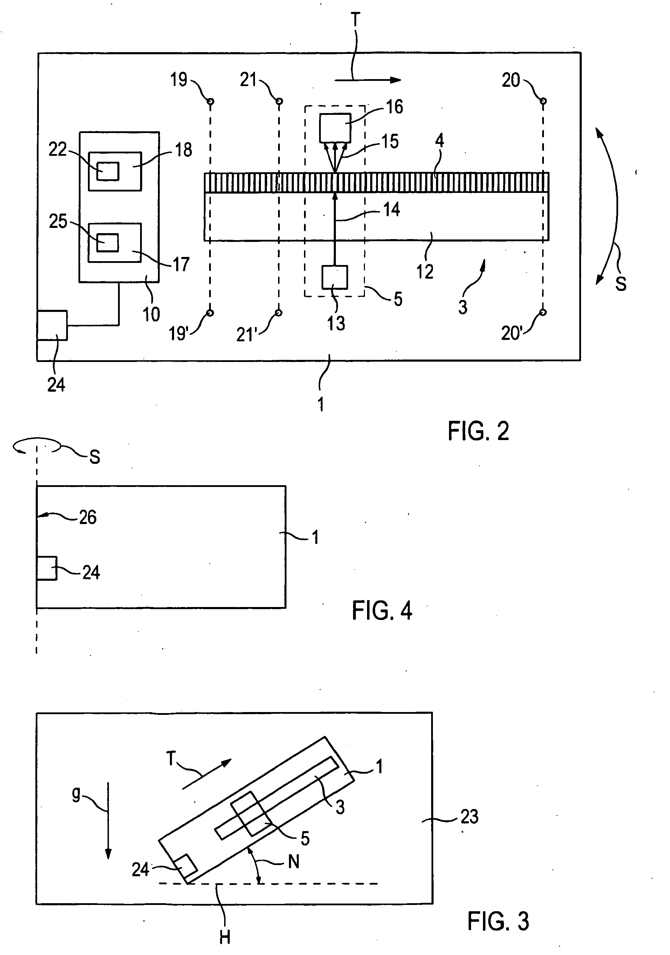

Das Radiografiemodul 1 umfasst ein Gehäuse 2, in welchem eine Speicherleuchtstoffplatte 3 angeordnet ist. Die Speicherleuchtstoffplatte 3 weist eine Speicherleuchtstoffschicht 4 und eine Trägerschicht auf, auf der die Speicherleuchtstoffschicht 4 aufgebracht ist (Fig. 2). Die Speicherleuchtstoffschicht 4 ist hier die obere Schicht der Speicherleuchtstoffplatte 3. Die Speicherleuchtstoffplatte 3 ist in dem Gehäuse 2 des Radiografiemoduls 1 ortsfest angeordnet, d. h. die Speicherleuchtstoffplatte 3 ist über geeignete Verbindungselemente fest mit dem Gehäuse 2 verbunden. Die Verbindung mit dem Gehäuse 2 kann hierbei starr oder auch schwingend sein, z. B. mittels geeigneter Aufhängungselemente, um etwaige äußere Stöße auf das Gehäuse 2 und deren Übertragung auf die Speicherleuchtstoffplatte 3 zu dämpfen.

Das Radiografiemodul 1 enthält ferner einen Lesekopf 5 zum Auslesen der Röntgeninformationen aus der Speicherleuchtstoffschicht 4. Der Lesekopf 5 ist in dem Gehäuse 2 beweglich gelagert. Dazu sind im Bereich der beiden Längsseiten der Speicherleuchtstoffplatte 3 Führungen 6 und 7 angeordnet, die dem Lesekopf 5 als Lager, vorzugsweise in Form von Luftlager, und Führung dienen. Zum Auslesen der Röntgeninformationen wird der Abtastkopf 5 durch einen geeigneten Antrieb 8, z. B. einen Linearmotor oder einen Schrittmotor mit Reibradgetriebe und Seilantrieb, angetrieben und in eine Transportrichtung T über die Speicherleuchtstoffplatte 3 bewegt. Zwischen der Speicherleuchtstoffschicht 4 und dem Lesekopf 5 findet somit eine Relativbewegung zum Auslesen statt. Das Antreiben des Lesekopfs 5, und damit die Relativbewegung zwischen der Speicherleuchtstoffschicht 4 und dem Lesekopf 5, erfolgt kontinuierlich mit einer sehr genauen linearen und konstanten Geschwindigkeit. Im vorliegenden Ausführungsbeispiel ist der Lesekopf 5 über die Speicherleuchtstoffschicht 4 bewegbar, während die Speicherleuchtstoffschicht 4 im Gehäuse 2 fest angeordnet ist. Es ist allerdings ebenso möglich, den Lesekopf 5 im Gehäuse ortsfest anzuordnen und die Speicherleuchtstoffplatte 3 am Lesekopf 5 vorbei zu bewegen.

Zusätzlich zum Lesekopf 5 ist eine Löschlampe 9 vorgesehen, die ebenfalls von dem Antrieb 8 angetrieben und über die Speicherleuchtstoffschicht 4 bewegt werden kann. Die Löschlampe 9 dient dazu, etwaige Restinformationen in der Speicherleuchtstoffschicht 4, die nach dem Auslesen noch vorhanden sein können, vor einer nachfolgenden Röntgenaufnahme zu löschen.

Es ist des Weiteren eine Steuereinrichtung 10 vorgesehen, die den Auslese- und Löschvorgang sowie etwaige Signalverarbeitungsprozesse steuert. An der Steuereinrichtung 10 sind verschiedene Schnittstellen 11 vorhanden, die zum Übertragen von Energie, ggf. Luft, Steuersignalen und/oder Bildsignalen zum und vom Radiografiemodul 1 erforderlich sind.

Fig. 2 zeigt eine weitere schematische Darstellung eines Aufbaus des Radiografiemoduls 1 nach Fig. 1. Das Radiografiemodul 1 ist hier in einer Seitenansicht gezeigt. Dargestellt ist die Speicherleuchtstoffplatte 3, die eine Trägerschicht 12 und die Speicherleuchtstoffschicht 4 aufweist. Die Speicherleuchtstoffschicht 4 setzt sich vorzugsweise aus einer Vielzahl von Phosphorpartikeln zusammen, die zum Speichern der Röntgeninformationen dienen. Die Trägerschicht 12 kann ein Laminat sein, das aus verschiedenen Schichten und Materialien zusammengesetzt ist. Die Trägerschicht 12 ist hier eine transparente Trägerschicht, die für Strahlung teilweise durchlässig ist.

Der Lesekopf 5 enthält eine Bestrahlungseinrichtung 13, die zum Bestrahlen der Speicherleuchtstoffschicht 4 mit einer Anregungsstrahlung 14 dient. Als Bestrahlungseinrichtung 13 wird hier eine Laserdiodenzeile eingesetzt werden, die eine Vielzahl von nebeneinander angeordneten Laserdioden enthält. Mit dieser Laserdiodenzeile wird eine Zeile der Speicherleuchtstoffschicht 4 gleichzeitig bestrahlt und angeregt. Es ist aber ebenso möglich, eine anders ausgestaltete Bestrahlungseinrichtung 13 zu verwenden.

Aufgrund des Anregens der Speicherleuchtstoffschicht 4 mittels der Anregungsstrahlung 14 emittiert die Speicherleuchtstoffschicht 4 eine Emissionsstrahlung 15, deren Intensität von den in der Speicherleuchtstoffschicht 4 abgespeicherten Röntgeninformationen abhängt. Zum Erfassen der emittierten Emissionsstrahlung enthält der Lesekopf 5 eine Detektionseinrichtung 16. Die Detektionseinrichtung 16 weist hier einen Zeilendetektor auf, der eine sogenannte "charge-coupled-device" (CCD)-Zeile enthalten kann. Die CCD-Zeile weist eine Vielzahl von parallel in einer Linie nebeneinander angeordneten Fotodetektoren auf. Mittels der Detektionseinrichtung 16 kann eine fotoelektrische Wandlung der empfangenen Emissionsstrahlung 15 durchgeführt werden. Die Detektionseinrichtung 16 wird in einem vorgegebenen Zeitabstand ausgelesen. Alternativ kann die Detektionseinrichtung 16 statt der CCD-Zeile beispielsweise einen Lichtleiter mit einem angeschlossenen Photomultiplier aufweisen. Zwischen der Bestrahlungseinrichtung 13 und der Detektionseinrichtung 16 besteht eine feste Verbindung, so dass die Abbildung der in der Speicherleuchtstoffschicht 4 gespeicherten Röntgeninformationen, d. h. die Anregung der Speicherleuchtstoffschicht 4 und der Empfang der aufgrund der Anregung emittierten Strahlung 15, genau aufeinander abgestimmt sind und auch während des eigentlichen Auslesevorgangs immer eine exakte Zuordnung gewährleistet ist.
Die Bestrahlungseinrichtung 13 ist im vorliegenden Ausführungsbeispiel unterhalb und die Detektionseinrichtung 16 oberhalb der Speicherleuchtstoffplatte 3 angeordnet. Die Bestrahlungseinrichtung 13 ist der Trägerschicht 12 und die Detektionseinrichtung 16 der Speicherleuchtstoffschicht 4 unmittelbar benachbart. Die Anregungsstrahlung 14 kann dabei in die transparente Trägerschicht 12 eindringen und von unten zur Speicherleuchtstoffschicht 4 gelangen.

Die Steuereinrichtung 10 enthält ein erstes Steuermittel 17 zum Steuern des Radiografiemoduls 1 und seiner Komponenten. Das erste Steuermittel 17 steuert daher insbesondere die Funktionen der Bestrahlungseinrichtung 13 und der Detektionseinrichtung 16 sowie des Antriebs 8 (siehe Fig. 1). Das erste Steuermittel 17 ist mit diesen Komponenten des Radiografiemoduls 1 verbunden. Ferner enthält die Steuereinrichtung 10 ein zweites Steuermittel 18 zum Verarbeiten der aus der Speicherleuchtstoffschicht 2 ausgelesenen Röntgeninformationen. Das zweite Steuermittel 18 ist insbesondere mit dem Detektionsmittel 16 verbunden, um die von diesem erzeugten elektrischen Signale, die ein Abbild der in der Speicherleuchtstoffschicht 4 abgespeicherten Röntgeninformationen enthalten, zu verarbeiten. Die beiden Steuermittel 17 und 18 können auch durch ein einziges Steuermittel realisiert sein.

Der Lesekopf 5, d. h. sowohl die Bestrahlungseinrichtung 13 als auch die Detektionseinrichtung 16, wird zum Auslesen der Röntgeninformationen mittels des Antriebs 8 mit einer Transportgeschwindigkeit entlang der Speicherleuchtstoffplatte 3 in die Transportrichtung T bewegt. Die Größe der Pixel im ausgelesenen Röntgenbild, und damit dessen Auflösung, ist, in Transportrichtung T betrachtet, u. a. abhängig von dieser Transportgeschwindigkeit und dem vorgegebenen Zeitabstand zum Auslesen der Detektionseinrichtung 16. Das erfindungsgemäße Radiografiemodul 1 enthält drei Sensoren, mit denen sich die Transportgeschwindigkeit überprüfen lässt. Ein erster Sensor 19, 19' ist, in Transportrichtung T betrachtet, am Anfang der Speicherleuchtstoffplatte 3, ein zweiter Sensor 20, 20' an deren Ende und ein dritter Sensor 21, 21' im ersten Drittel der Speicherleuchtstoffplatte 3 angeordnet. Alternativ kann einer oder mehrere dieser Sensoren 19, 19' bzw. 20, 20' bzw. 21, 21' auch vor der Speicherleuchtstoffplatte 3 angeordnet sein. Es ist außerdem möglich, weitere oder auch weniger Sensoren vorzusehen. Die Sensoren 19, 19', 20, 20', 21, 21' sind hier Lichtschranken, die ihr Durchfahren durch den Lesekopf 5 detektieren. Es ist aber auch möglich, andere Arten von Sensoren einzusetzen. Mittels der beiden Sensoren 19, 19' und 20, 20' lässt sich eine Zeit zu Beginn und eine Zeit am Ende des Auslesevorgangs feststellen. Der Sensor 21, 21' stellt eine Zeit noch relativ zu Beginn des Auslesevorgangs, allerdings nach genügend langer, zurückgelegter Wegstrecke, fest, um zu gewährleisten, dass ein Messergebnis für eine relevante Wegstrecke bestimmt wird. Mittels der Sensoren 19, 19', 20, 20', 21, 21' wird die Zeit gemessen, die der Lesekopf 5 benötigt, um die Strecke zwischen den Sensoren 19, 19', 20, 20', 21, 21' zurückzulegen. Daraus ergibt sich eine mittlere Transportgeschwindigkeit des Lesekopfs 5, da die Strecken bekannt sind.

Die Sensoren 19, 19', 20, 20', 21, 21' sind mit den beiden Steuermitteln 17, 18 verbunden, um ihr Durchfahren durch den Lesekopf 5 zum Verwerten durch die Steuermittel 17, 18 weiterzuleiten. Die Steuermittel 17, 18 können eine Abweichung der gemessenen mittleren Transportgeschwindigkeit von einer vorgegebenen Transportgeschwindigkeit feststellen. Daraufhin können sie entsprechende Gegenmaßnahmen veranlassen.

Das erste Steuermittel 17 zum Steuern des Radiografiemoduls 1 kann vorteilhafterweise unmittelbar nach dem Durchfahren des dritten Sensors 21, 21' durch den Lesekopf 5 bei zu korrigierender Geschwindigkeit ein entsprechend geeignetes Ansteuern von Komponenten des Radiografiemoduls 1 vornehmen. Dadurch, dass der dritte Sensor 21, 21' hier bereits im ersten Drittel der Wegstrecke zum Auslesen der Röntgeninformationen angeordnet ist, kann das erste Steuermittel 17 gegebenenfalls bereits beim weiteren Auslesen des aktuellen Röntgenbilds ein geeignetes Ansteuern der Komponenten vornehmen. Der Antrieb 8 kann veranlasst werden, in Abhängigkeit von der vorzunehmenden Korrektur den Lesekopf 5 schneller oder langsamer anzutreiben. Zusätzlich oder alternativ kann das erste Steuermittel 17 so ausgestaltet sein, dass es die Bestrahlungseinrichtung 13 so ansteuert, dass sie die Strahlungsintensität der Anregungsstrahlung 14 oder die Dauer des Einstrahlens der Anregungsstrahlung in eine Zeile der Speicherleuchtstoffschicht in geeigneter Weise verändert. Bei zu schneller Transportgeschwindigkeit kann die Strahlungsintensität der Anregungsstrahlung vorteilhafterweise erhöht und bei zu langsamer Transportgeschwindigkeit erniedrigt werden, um möglichst gleichbleibende Strahlungsmengen der Anregungsstrahlung beim Anregen der Zeilen der Speicherleuchtstoffschicht 4 zu erhalten. Des Weiteren zusätzlich oder alternativ kann das erste Steuermittel 17 so ausgestaltet sein, dass es die Detektionseinrichtung 16 so ansteuert, dass die Zeitdauer des Aufsammelns von Emissionsstrahlung pro Zeile der Speicherleuchtstoffschicht 4 verändert wird. Bei zu schneller Transportgeschwindigkeit kann die Zeitdauer vorteilhafterweise verkürzt und bei zu langsamer Transportgeschwindigkeit verlängert werden, um eine möglichst konstante Pixelgröße, und damit Auflösung, im Röntgenbild, in Transportrichtung T betrachtet, zu erhalten. Die Strecken, die von dem Lesekopf 5 für das Auslesen der einzelnen Zeilen der Speicherleuchtstoffschicht 4 zurückgelegt werden, sind dann konstant.

Das zweite Steuermittel 18 zum Verarbeiten der ausgelesenen Röntgeninformationen ist vorteilhafterweise so ausgestaltet, dass es die ausgelesenen Röntgeninformationen in Abhängigkeit von der erfassten Transportgeschwindigkeit verarbeitet. Das zweite Steuermittel 18 enthält hier vorgegebene Angaben zum Verarbeiten der ausgelesenen Röntgeninformationen. Diese Angaben enthalten Vorgaben, wie die ausgelesenen Röntgeninformationen zu korrigieren sind. Die Angaben sind in einem Speicher 22 des zweiten Steuermittels 18 vor allem als sogenannte Look-Up Tabellen abgespeichert. Sie wurden vorteilhafterweise in Vorversuchen bestimmt und geben typische Korrekturmöglichkeiten an, die insbesondere Erfahrungswerten entsprechen. Das zweite Steuermittel 18 ist so ausgestaltet, dass es wenigstens einen Teil der vorgegebene Angaben in Abhängigkeit von der erfassten Transportgeschwindigkeit auswählt und die ausgewählten Angaben zum Verarbeiten der Röntgeninformationen verwendet. Das zweite Steuermittel 18 legt, in Richtung der Relativbewegung betrachtet, die Pixelgröße der ausgelesenen Röntgeninformationen und/oder eine Intensität der ausgelesenen Röntgeninformationen in Abhängigkeit von der erfassten Transportgeschwindigkeit fest. Somit kann gewährleistet werden, dass die Intensitäten von ausgelesenen und verarbeiteten Röntgenbildern gleich und deren Auflösungen, insbesondere in Transportrichtung T betrachtet, konstant sind.
Wie bereits zuvor beschrieben, ist das Radiografiemodul 1 schwenkbar. Dies ist in der Fig. 2 durch einen gebogenen Doppelpfeil S kenntlich gemacht. Zum Verschwenken kann das Radiografiemodul 1 eine Drehachse aufweisen, um die es schwenkbar ist. Das Radiografiemodul 1 kann in unterschiedlichen Ausrichtungen, d. h. Orientierungen oder Lagen, verwendet werden. Die Ausrichtung des Radiografiemoduls 1 ergibt sich beispielsweise durch die Ausgestaltung einer Aufnahmeeinrichtung für das Radiografiemodul 1 in einem Röntgensystem, z. B. einem Röntgentisch, in dem das Radiografiemodul 1 eingesetzt wird. Diese Aufnahmeeinrichtung kann eine Neigung gegenüber einer Horizontalen haben. Fig. 3 zeigt ein Beispiel für ein Röntgensystem 23, in das das Radiografiemodul 1 eingeschoben wurde. Das Radiografiemodul 1 hat in dem Röntgensystem 23 eine Neigung N gegenüber einer Horizontalen H. Aufgrund der Neigung N des Radiografiemoduls 1 haben auch die Speicherleuchtstoffplatte 3 und der Lesekopf 5 eine solche Neigung N. Dies bedeutet, dass beim Antreiben des Lesekopfs 5 durch die schräge, geschwenkte Ausrichtung des Radiografiemoduls 1 eine Schwerkraft g auf das Antreiben, d. h. den Vorschub in die Transportrichtung T, des Lesekopfs 5 wirkt. Die Schwerkraft g ergibt sich aus der Erdbeschleunigung. Da für den Lesekopf 5 beim Vorschub ein sehr hoher Gleichlauf erforderlich ist, kann diese Wirkung der Schwerkraft g auf das Auslesen der abgespeicherten Röntgeninformationen nachteilig sein und im ausgelesenen Röntgenbild Verzerrungen verursachen. Beim Antreiben des Lesekopfs 5 mittels des Antriebs 8 kann unter Umständen ein Schlupf auftreten, so dass Artefakte entstehen. Abhängig von dem Grad der Neigung N kann der Einfluss der Schwerkraft g unterschiedlich stark sein.

Erfindungsgemäß enthält das Radiografiemodul 1 ein Erfassungsmittel 24 zum Erfassen seiner Ausrichtung. Interessant ist hier insbesondere seine Ausrichtung gegen die Horizontale. Das Erfassungsmittel kann beispielsweise ein Beschleunigungssensor sein, der die Richtung der Erdbeschleunigung erfasst. Dadurch kann bestimmt werden, in welche Richtung die Belastung durch die Schwerkraft auf den Lesekopf 5 wirkt. Das Erfassungsmittel 24 ist mit der Steuereinrichtung 10 und insbesondere mit den beiden Steuermitteln 17, 18 verbunden (Fig. 2). Die festgestellte Ausrichtung kann somit an die Steuermittel 17, 18 zum weiteren Verarbeiten weitergeleitet werden.

Das erste Steuermittel 17 ist so ausgestaltet, dass es das Auslesen der Röntgeninformationen in Abhängigkeit von der erfassten Ausrichtung des Röntgenmoduls 1 steuert. Das erste Steuermittel 17 steuert dazu ein oder mehrere der Komponenten des Radiografiemoduls 1, insbesondere die Bestrahlungseinrichtung 13, die Detektionseinrichtung 16 und/oder den Antrieb 8, in geeigneter Weise an. Dieses Ansteuern erfolgt in der entsprechenden Weise, wie oben in Zusammenhang mit dem Verändern der Transportgeschwindigkeit beschrieben. Dabei soll vorteilhafterweise ein gleichmäßiges Anregen der Zeilen der Speicherleuchtstoffschicht 4, ein geeignetes Erfassen der Emissionsstrahlung 15 und/oder eine konstante Transportgeschwindigkeit gewährleistet werden. Das erste Steuermittel 17 enthält vorgegebene Angaben zum Steuern der Vorrichtung. Diese Angaben enthalten Vorgaben, wie die jeweiligen Komponenten des Radiografiemoduls 1 in geeigneter Weise zu korrigieren sind. Die Angaben sind in einem Speicher 25 des ersten Steuermittels 17 als sogenannte Look-Up Tabellen abgespeichert. Sie wurden vorteilhafterweise in Vorversuchen bestimmt und geben typische Korrekturmöglichkeiten an, die insbesondere Erfahrungswerten entsprechen. Die Angaben entsprechen Kalibrierkennlinien oder Kalibrierbildern. Das erste Steuermittel 17 ist so ausgestaltet, dass es einen Teil der vorgegebene Angaben in Abhängigkeit von der erfassten Ausrichtung des Radiografiemoduls 1 auswählt und die ausgewählten Angaben deren Steuern verwendet.

Das zweite Steuermittel 18 ist so ausgestaltet, dass es die ausgelesenen Röntgeninformationen in Abhängigkeit von dem Erfassen der Ausrichtung des Röntgenmoduls 1 verarbeitet. Dabei sind in dem Speicher 22 weitere vorgegebene Angaben zum Verarbeiten der ausgelesenen Röntgeninformationen enthalten. Die vorgegebenen Angaben wurden ebenfalls durch Vorversuche ermittelt und geben Möglichkeiten an, wie die ausgelesenen Röntgeninformationen abhängig von der Ausrichtung, d. h. insbesondere dem Grad der Neigung N, korrigiert werden. Die weiteren Angaben sind ebenfalls in Form von sogenannten Look-Up Tabellen abgespeichert. Das zweite Steuermittel 18 ist so ausgestaltet, dass es wenigstens einen Teil der vorgegebene Angaben in Abhängigkeit von der erfassten Ausrichtung des Radiografiemoduls 1 auswählt und die ausgewählten Angaben zum Verarbeiten der Röntgeninformationen verwendet. Dabei sollen, wie oben im Zusammenhang mit dem Verändern der Transportgeschwindigkeit beschrieben, die Intensität und/oder die Auflösung der Röntgenbilder geeignet eingestellt werden.

Das Radiografiemodul 1 ist im vorliegenden Ausführungsbeispiel selbstlernend. Das Radiografiemodul 1 ist so ausgestaltet, dass es die von dem Erfassungsmittel 24 erfasste Ausrichtung und die von den Sensoren 19, 19', 20, 20', 21, 21' bei Vorliegen dieser erfasste Ausrichtung erfasste Transportgeschwindigkeit des Lesekopfs 5 einander zuordnet. Diese Zuordnung wird dann den in dem Speicher 22 abgespeicherten vorgegebenen Angaben zum Verarbeiten der Röntgeninformationen und den im Speicher 25 abgespeicherten vorgegebenen Angaben zum Steuern des Radiografiemoduls 1 hinzufügt. Dadurch können diese Angaben immer weiter verfeinert und verbessert werden. Mit zunehmender Benutzung des Radiografiemoduls 1 wird somit dessen Korrektur von durch das Verschwenken aus der Horizontalen heraus entstehende Verzerrungen ständig verbessert. Dies kann für nachfolgende Röntgenbilder genutzt werden.

Fig. 4 zeigt eine schematische Darstellung einer Draufsicht auf das Radiografiemodul 1. Diese Darstellung verdeutlicht, dass das Radiografiemodul 1 eine Drehachse 26 aufweisen kann, um die es verschwenkbar ist. Die Drehachse 26 ist in der Fig. 4 am linken Rand des Radiografiemoduls 1 angedeutet. Zum Erfassen der Ausrichtung des Radiografiemoduls 1 im verschwenkten Zustand kann das Erfassungsmittel 24 einen Drehsensor aufwiesen. Der Drehsensor ist vorteilhafterweise an der Drehachse 26 platziert und erfasst vorteilhafterweise die Ausrichtung des Radiografiemoduls 1 in Bezug auf seine Drehachse 26.

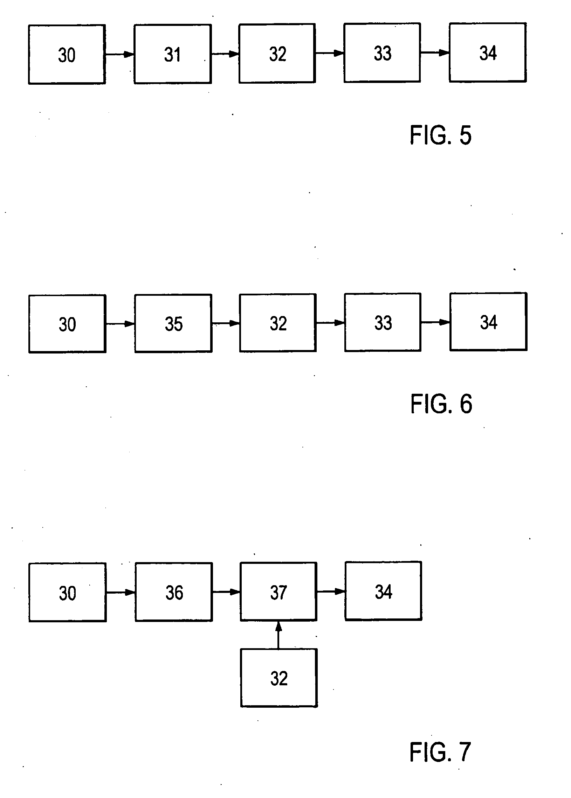

Fig. 5 zeigt ein Ablaufdiagramm eines erfindungsgemäßen Ablaufs eines Anpassens der Transportgeschwindigkeit des Lesekopfs 5 in dem Radiografiemodul 1. In einem Schritt 30 wird die Ausrichtung des Radiografiemoduls 1 bestimmt. Anschließend werden mittels der so bestimmten Ausrichtung in einem Schritt 31 Parameter berechnet, die zum Ansteuern des Antriebs 8 dienen. Mittels dieser Steuerparameter werden dann in einem Schritt 32 die Röntgeninformationen aus der Speicherleuchtstoffschicht 4 ausgelesen und dabei gleichzeitig die Transportgeschwindigkeit des Lesekopfs 5 gemessen. Die ausgelesenen Röntgeninformationen werden an das zweite Steuermittel 18 weitergeleitet und daraufhin erfolgt in einem Schritt 33 das Verarbeiten und Korrigieren der Röntgeninformationen. In einem nachfolgenden Schritt 34 werden die Daten des Röntgenbildes weiterverarbeitet, gespeichert und es erfolgt eine Anzeige des Röntgenbildes auf einem Monitor oder ein Belichten auf einen Röntgenfilm.

Fig. 6 zeigt ein Ablaufdiagramm eines erfindungsgemäßen Ablaufs eines Ansteuerns der Bestrahlungseinrichtung 13 und/oder der Detektionseinrichtung 16 zum Korrigieren einer Änderung der Transportgeschwindigkeit. Das Ablaufdiagramm gemäß Fig. 6 entspricht weitgehend demjenigen nach Fig. 5. Allerdings wird nach dem Schritt 30 in einem Schritt 35 in Abhängigkeit von der ermittelten Ausrichtung die zum Anregen der Speicherleuchtstoffschicht 4 benötigte Intensität der Anregungsstrahlung 14 und/oder die Auslesezeit zum Auslesen der Detektionseinrichtung 16 festgelegt. Diese Angaben werden dann entsprechend in dem Schritt 32 zum Auslesen der Röntgeninformationen eingesetzt.

Fig. 7 zeigt ein Ablaufdiagramm eines erfindungsgemäßen Ablaufs eines Korrigierens von unerwünschten Verzerrungen in den ausgelesenen Röntgeninformationen mittels des zweiten Steuermittels 18. In dem Schritt 30 erfolgt zunächst wieder das Erfassen der Ausrichtung des Radiografiemoduls 1. Die erfasste Ausrichtung wird dem zweiten Steuermittel 18 übermittelt und dieses berechnet daraufhin in einem Schritt 36 geeignete Korrekturparameter. Diese Korrekturparameter werden in einem Schritt 37 beim Verarbeiten der in dem Schritt 32 ausgelesenen Röntgeninformationen verwendet.

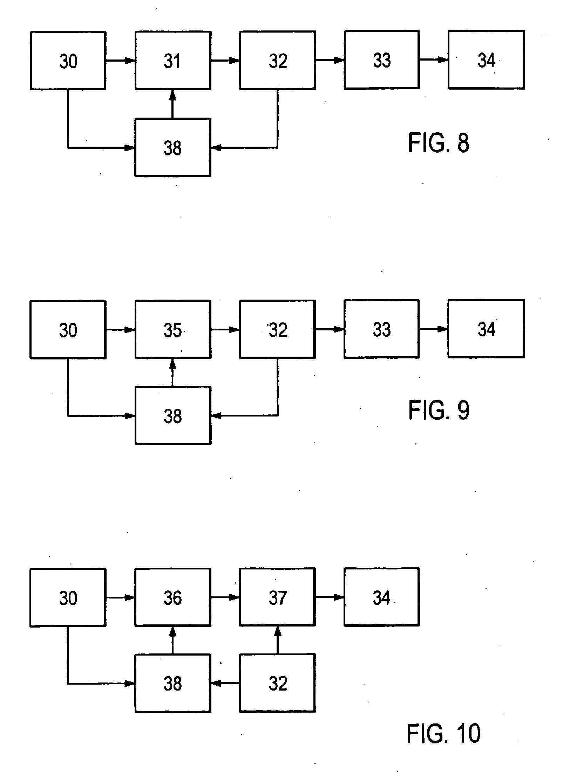

Fig. 8 zeigt ein Ablaufdiagramm eines erfindungsgemäßen Ablaufs eines Anpassens der Transportgeschwindigkeit des Lesekopfs 5 in dem Radiografiemodul 1 mittels zuvor bei vorhergehenden Röntgenbildern ermittelter Korrekturparameter. Die Fig. 8 entspricht weitgehend der Fig. 5. Allerdings ist ein zusätzlicher Schritt 38 vorhanden, bei dem eine Zuordnung von in dem Schritt 30 erfasster Ausrichtung und in dem Schritt 32 gemessener Transportgeschwindigkeit vorgenommen wird. Diese Zuordnung wird abgespeichert. Die Berechnung der Parameter zum Ansteuern des Antriebs 8 im Schritt 31 erfolgt hier mittels der abgespeicherten Zuordnungen vorhergehender Auslesevorgänge.

Entsprechendes gilt für die Fig. 9, die ein Ablaufdiagramm eines erfindungsgemäßen Ablaufs eines Ansteuerns der Bestrahlungseinrichtung 13 und/oder der Detektionseinrichtung 16 zum Korrigieren einer Änderung der Transportgeschwindigkeit zeigt. Die Fig. 9 entspricht weitgehend der Fig. 6, wobei hier ebenfalls der zusätzliche Schritt 38 vorhanden ist. Die zum Anregen der Speicherleuchtstoffschicht 4 benötigte Intensität der Anregungsstrahlung 14 und/oder die Auslesezeit zum Auslesen der Detektionseinrichtung 16 für das aktuelle Röntgenbild werden in dem Schritt 35 zusätzlich abhängig von den Zuordnung von in dem Schritt 30 erfassten Ausrichtungen und in dem Schritt 32 gemessenen Transportgeschwindigkeiten festgelegt.

Entsprechendes gilt ebenfalls für die Fig. 10, die ein Ablaufdiagramm eines erfindungsgemäßen Ablaufs des Korrigierens von unerwünschten Verzerrungen in den ausgelesenen Röntgeninformationen mittels des zweiten Steuermittels 18 angibt. Die Fig. 10 entspricht weitgehend der Fig. 7, wobei hier ebenfalls der zusätzliche Schritt 38 vorhanden ist. Die in dem Schritt 30 erfasste Ausrichtung für das aktuelle Röntgenbild und die Zuordnung von in dem Schritt 30 erfassten Ausrichtungen und in dem Schritt 32 gemessenen Transportgeschwindigkeiten vorhergehender Röntgenbilder werden von dem zweiten Steuermittel 18 zum Berechnen geeigneter Korrekturparameter verwendet.

## Patentansprüche

1. Vorrichtung (1) zum Auslesen von in einer Speicherleuchtstoffschicht (4) abgespeicherten Röntgeninformationen eines Röntgenbilds, wobei die Vorrichtung (1) schwenkbar ist, wobei eine Bestrahlungseinrichtung (13) zum Bestrahlen der Speicherleuchtstoffschicht (4) mit einer Anregungsstrahlung (14) und eine Detektionseinrichtung (16) zum Erfassen von Emissionsstrahlung (15), die die Speicherleuchtstoffschicht (4) aufgrund des Bestrahlens mittels der Anregungsstrahlung (14) ausgibt, sowie eine Antriebseinrichtung (8) zum Erzeugen einer Relativbewegung zwischen der Speicherleuchtstoffschicht (4) einerseits und der Anregungseinrichtung (13) und der Detektionseinrichtung (16) andererseits vorhanden sind,
**dadurch gekennzeichnet, dass**
ein Erfassungsmittel (24) zum Erfassen einer Ausrichtung der Vorrichtung (1) vorhanden ist und
- ein Steuermittel (18) zum Verarbeiten der aus der Speicherleuchtstoffschicht (4) ausgelesenen Röntgeninformationen vorhanden ist, das so ausgestaltet ist, dass es die ausgelesenen Röntgeninformationen in Abhängigkeit von der erfassten Ausrichtung der Vorrichtung (1) verarbeitet, wobei die Intensität und/oder die Auflösung der Röntgenbilder eingestellt werden,
und/oder
- ein weiteres Steuermittel (17) zum Steuern der Vorrichtung (1) vorhanden ist, wobei das weitere Steuermittel (17) so ausgestaltet ist, dass es das Auslesen der Röntgeninformationen in Abhängigkeit von der erfassten Ausrichtung der Vorrichtung (1) steuert, indem es die Bestrahlungseinrichtung (13) durch Verändern der Strahlungsintensität oder Dauer des Einstrahlens der Anregungsstrahlung (14) und/oder die Detektionseinrichtung (16) durch Verändern der Zeitdauer des Aufsammelns von Emissionsstrahlung (15) und/oder die Geschwindigkeit der Relativbewegung in Abhängigkeit von der erfassten Ausrichtung der Vorrichtung (1) ansteuert.

2. Vorrichtung nach Anspruch 1, **dadurch gekennzeichnet, dass** das Erfassungsmittel (24) so ausgestaltet ist, dass es die Richtung der Erdbeschleunigung erfasst.

3. Vorrichtung nach Anspruch 1 oder 2, **dadurch gekennzeichnet, dass** das Erfassungsmittel (24) wenigstens einen Beschleunigungssensor umfasst.

4. Vorrichtung nach einem der vorhergehenden Ansprüche, **dadurch gekennzeichnet, dass** das Erfassungsmittel (24) wenigstens einen Drehsensor umfasst.

5. Vorrichtung nach Anspruch 4, **dadurch gekennzeichnet, dass** der wenigstens eine Drehsensor an einer Drehachse (26) der Vorrichtung angeordnet ist.

6. Vorrichtung nach Anspruch 1, **dadurch gekennzeichnet, dass** das Steuermittel (18) vorgegebene Angaben zum Verarbeiten der ausgelesenen Röntgeninformationen enthält und so ausgestaltet ist, dass es wenigstens einen Teil der vorgegebenen Angaben in Abhängigkeit von der erfassten Ausrichtung der Vorrichtung (1) auswählt und die ausgewählten Angaben zum Verarbeiten der Röntgeninformationen verwendet.

7. Vorrichtung nach einem der vorhergehenden Ansprüche, **dadurch gekennzeichnet, dass** die Bestrahlungseinrichtung (13) und die Detektionseinrichtung (16) einander fest zugeordnet sind.

8. Vorrichtung nach einem der vorhergehenden Ansprüche, **dadurch gekennzeichnet, dass** das weitere Steuermittel (17) vorgegebene Angaben zum Steuern der Vorrichtung (1) enthält und so ausgestaltet ist, dass es einen Teil der vorgegebene Angaben in Abhängigkeit von der erfassten Ausrichtung der Vorrichtung (1) auswählt und die ausgewählten Angaben zum Steuern der Vorrichtung (1) verwendet.

9. Vorrichtung nach einem der vorhergehenden Ansprüche, **dadurch gekennzeichnet, dass** ein weiteres Erfassungsmittel (19, 19', 20, 20', 21, 21') zum Erfassen einer Geschwindigkeit der Relativbewegung vorhanden ist.

10. Vorrichtung nach Anspruch 9, **dadurch gekennzeichnet, dass** das weitere Erfassungsmittel (19, 19', 20, 20', 21, 21') so ausgestaltet ist, dass es wenigstens eine mittlere Geschwindigkeit der Relativbewegung erfasst, wobei diese mittlere Geschwindigkeit während des Auslesens der Röntgeninformationen zwischen wenigstens zwei relativen Positionen zwischen der Speicherleuchtstoffschicht (4) einerseits und der Anregungseinrichtung (13) und Detektionseinrichtung (16) andererseits auftritt.

11. Vorrichtung nach Anspruch 10, **dadurch gekennzeichnet, dass** das weitere Erfassungsmittel (19, 19', 20, 20', 21, 21') wenigstens zwei Sensoren aufweist, die den wenigstens zwei relativen Positionen zugeordnet sind und zum Bestimmen einer Zeit dienen, die die Relativbewegung beim Auslesen der Röntgeninformationen zwischen dem Erreichen der wenigstens zwei Postitionen benötigt.

12. Vorrichtung nach Anspruch 6 und einem der Ansprüche 9 bis 11, **dadurch gekennzeichnet, dass** sie so ausgestaltet ist, dass sie die von dem Erfassungsmittel (24) erfasste Ausrichtung der Vorrichtung (1) und die von dem weiteren Erfassungsmittel (19, 19', 20, 20', 21, 21') erfasste Geschwindigkeit einander zuordnet und diese Zuordnung den vorgegebenen Angaben zum Verarbeiten der Röntgeninformationen hinzufügt.

13. Vorrichtung nach Anspruch 8 und einem der Ansprüche 9 bis 12, **dadurch gekennzeichnet, dass** sie so ausgestaltet ist, dass sie die von dem Erfassungsmittel (24) erfasste Ausrichtung der Vorrichtung (1) und die von dem weiteren Erfassungsmittel (19, 19', 20, 20', 21, 21') erfasste Geschwindigkeit einander zuordnet und diese Zuordnung den vorgegebenen Angaben zum Steuern der Vorrichtung (1) hinzufügt.

14. Radiografiemodul, insbesondere in Form einer Röntgenkassette, mit einem Gehäuse (2), in das eine Vorrichtung (1) nach einem der Ansprüche 1 bis 13 integriert ist.

## Claims

1. An apparatus (1) for reading out X-ray information of an X-ray image stored in a storage phosphor layer (4), the apparatus being pivotable (1), an irradiation device (13) for irradiating the storage phosphor layer (4) with stimulation radiation (14) and a detection device (16) for collecting emission radiation (15) which is emitted by the storage phosphor layer (4) due to irradiation by means of the stimulation radiation (14), and a drive device (8) for producing a relative movement between the storage phosphor layer (4) on the one hand and the stimulation device (13) and the detection device (16) on the other hand being provided,
**characterised in that**
a recording means (24) is provided for recording an alignment of the apparatus (1), and
- a control means (18) for processing the X-ray information read out from the storage phosphor layer (4) is provided which is designed such that it processes the read out X-ray information dependently upon the recorded alignment of the apparatus (1), the intensity and/or the resolution of the X-ray images being adjusted,
and/or
- a further control means (17) for controlling the apparatus (1) is provided, the further control means (17) being designed such that it controls the read-out of the X-ray information dependently upon the recorded alignment of the apparatus (1) by controlling the irradiation device (13) by changing the radiation intensity or the duration of the irradiation of the stimulation radiation (14) and/or the detection device (16) by changing the duration of the collection of emission radiation (15) and/or the speed of the relative movement dependently upon the recorded alignment of the apparatus (1).

2. The apparatus according to Claim 1, **characterised in that** the recording means (24) is designed such that it records the direction of the acceleration due to gravity.

3. The apparatus according to Claim 1 or 2, **characterised in that** the recording means (24) comprises at least one acceleration sensor.

4. The apparatus according to any of the preceding claims, **characterised in that** the recording means (24) comprises at least one rotation sensor.

5. The apparatus according to Claim 4, **characterised in that** the at least one rotation sensor is disposed on an axis of rotation (26) of the apparatus.

6. The apparatus according to Claim 1, **characterised in that** the control means (18) contains pre-specified details for the processing of the read-out X-ray information and is designed such that it selects at least part of the pre-specified details dependently upon the recorded alignment of the apparatus (1) and uses the selected details for processing the X-ray information.

7. The apparatus according to any of the preceding claims, **characterised in that** the irradiation device (13) and the detection device (16) are firmly assigned to one another.

8. The apparatus according to any of the preceding claims, **characterised in that** the further control means (17) contains pre-specified details for controlling the apparatus (1) and is designed such that it selects part of the pre-specified details dependently upon the recorded alignment of the apparatus (1) and uses the selected details for controlling the apparatus (1).

9. The apparatus according to any of the preceding claims, **characterised in that** a further recording means (19, 19', 20, 20', 21, 21') for recording a speed of the relative movement is provided.

10. The apparatus according to Claim 9, **characterised in that** the further recording means (19, 19', 20, 20', 21, 21') is designed such that it records at least an average speed of the relative movement, this average speed occurring during the read-out of the X-ray information between at least two relative positions between the storage phosphor layer (4) on the one hand and the stimulation device (13) and the detection device (16) on the other hand.

11. The apparatus according to Claim 10, **characterised in that** the further recording means (19, 19', 20, 20', 21, 21') has at least two sensors which are assigned to the at least two relative positions and serve to determine a time which the relative movement requires when reading out the X-ray information between reaching the at least two positions.

12. The apparatus according to Claim 6 and any of Claims 9 to 11, **characterised in that** it is designed such that it assigns the alignment of the apparatus (1) recorded by the recording means (24) and the speed recorded by the further recording means (19, 19', 20, 20', 21, 21') to one another and adds this assignment to the pre-specified details for processing the X-ray information.

13. The apparatus according to Claim 8 and any of Claims 9 to 12, **characterised in that** it is designed such that it assigns the alignment of the apparatus (1) recorded by the recording means (24) and the speed recorded by the further recording means (19, 19', 20, 20', 21, 21') to one another and adds this assignment to the pre-specified details for controlling the apparatus (1).

14. A radiography module, in particular in the form of an X-ray cassette, having a housing (2) into which an apparatus (1) according to any of Claims 1 to 13 is integrated.

## Revendications

1. Dispositif (1) destiné à la lecture des informations radiographiques d'une image radiographique stockées dans une couche fluorescente de mémoire (4), dans lequel le dispositif (1) est pivotant et comprend un dispositif d'exposition (13) destiné à exposer la couche fluorescente de mémoire (4) à un rayonnement d'excitation (14) et un dispositif de détection (16) destiné à détecter un rayonnement d'émission (15) émis par la couche fluorescente de mémoire (4) suite à l'exposition au rayonnement d'excitation (14), ainsi qu'un dispositif d'entraînement (8) destiné à produire un mouvement relatif entre, d'une part, la couche fluorescente de mémoire (4) et, d'autre part, le dispositif d'excitation (13) et le dispositif de détection (16),
**caractérisé en ce que**
il est prévu un moyen de détection (24) destiné à détecter une orientation du dispositif (1) et
- il est prévu un moyen de commande (18) destiné à traiter les informations radiographiques extraites de la couche fluorescente de mémoire (4) et conçu de manière à traiter les informations radiographiques lues en fonction de l'orientation détectée du dispositif (1), ledit moyen de commande réglant l'intensité et/ou la résolution des images radiographiques,
et/ou
- il est prévu un moyen de commande supplémentaire (17) destiné à commander le dispositif (1), le moyen de commande supplémentaire (17) étant conçu de manière à commander la lecture des informations radiographiques en fonction de l'orientation détectée du dispositif (1), en commandant le dispositif d'exposition (13) qui modifie l'intensité du rayonnement ou la durée d'émission du rayonnement d'excitation (14) et/ou en commandant le dispositif de détection (16) qui modifie la durée de perception du rayonnement d'émission (15) et/ou en commandant la vitesse du mouvement relatif, en fonction de l'orientation détectée du dispositif (1).

2. Dispositif selon la revendication 1, **caractérisé en ce que** le moyen de détection (24) est conçu de manière à détecter le sens de l'accélération de la pesanteur.

3. Dispositif selon la revendication 1 ou 2, **caractérisé en ce que** le moyen de détection (24) comprend au moins un capteur d'accélération.

4. Dispositif selon l'une des revendications précédentes, **caractérisé en ce que** le moyen de détection (24) comprend au moins un capteur de rotation.

5. Dispositif selon la revendication 4, **caractérisé en ce que** l'au moins un capteur de rotation est agencé sur un axe de rotation (26) du dispositif.

6. Dispositif selon la revendication 1, **caractérisé en ce que** le moyen de commande (18) renferme des indications prédéfinies destinées au traitement des informations radiographiques lues et est conçu de manière à choisir au moins une partie des indications prédéfinies en fonction de l'orientation détectée du dispositif (1) et à mettre en oeuvre les indications choisies pour traiter les informations radiographiques.

7. Dispositif selon l'une des revendications précédentes, **caractérisé en ce que** le dispositif d'exposition (13) et le dispositif de détection (16) sont solidement associés l'un à l'autre.

8. Dispositif selon l'une des revendications précédentes, **caractérisé en ce que** le moyen de commande supplémentaire (17) renferme des indications prédéfinies destinées à commander le dispositif (1) et est conçu de manière à choisir une partie des indications prédéfinies en fonction de l'orientation détectée du dispositif (1) et à mettre en oeuvre les indications choisies pour commander le dispositif (1).

9. Dispositif selon l'une des revendications précédentes, **caractérisé en ce qu'**il est prévu un moyen de détection supplémentaire (19, 19', 20, 20', 21, 21') destiné à détecter une vitesse du mouvement relatif.

10. Dispositif selon la revendication 9, **caractérisé en ce que** le moyen de détection supplémentaire (19, 19', 20, 20', 21, 21') est conçu de manière à détecter au moins une vitesse moyenne du mouvement relatif, cette vitesse moyenne se produisant lors de la lecture des informations radiographiques entre au moins deux positions relatives entre, d'une part, la couche fluorescente de mémoire (4) et, d'autre part, le dispositif d'excitation (13) et le dispositif de détection (16).

11. Dispositif selon la revendication 10, **caractérisé en ce que** le moyen de détection supplémentaire (19, 19', 20, 20', 21, 21') présente au moins deux capteurs qui sont associés aux au moins deux positions relatives et servent à déterminer un temps nécessaire au mouvement relatif pour atteindre les au moins deux positions lors de la lecture des informations radiographiques.

12. Dispositif selon la revendication 6 et l'une des revendications 9 à 11, **caractérisé en ce qu'**il est conçu de manière à associer l'une à l'autre l'orientation du dispositif (1) détectée par le moyen de détection (24) et la vitesse détectée par le moyen de détection supplémentaire (19, 19', 20, 20', 21, 21') et à ajouter cette association aux indications prédéfinies destinées au traitement des informations radiographiques.

13. Dispositif selon la revendication 8 et l'une des revendications 9 à 12, **caractérisé en ce qu'**il est conçu de manière à associer l'une à l'autre l'orientation du dispositif (1) détectée par le moyen de détection (24) et la vitesse détectée par le moyen de détection supplémentaire (19, 19', 20, 20', 21, 21') et à ajouter cette association aux indications prédéfinies destinées à commander le dispositif (1).

14. Module radiographique, présentant notamment la forme d'une cassette radiographique, comprenant un boîtier (2), dans lequel est intégré un dispositif (1) selon l'une des revendications 1 à 13.
